# EUROPÄISCHE PATENTSCHRIFT

(11) **EP 2 707 249 B1**
(45) Veröffentlichungstag und Bekanntmachung des Hinweises auf die Patenterteilung: **13.04.2016**
(21) Anmeldenummer: 12717769.9
(22) Anmeldetag: 03.05.2012
(51) Int. Cl.: B60N 2/22, B60N 2/08, B60N 2/12

(54) **LÄNGSEINSTELLBARER FAHRZEUGSITZ MIT MEMORYVORRICHTUNG**
LONGITUDINALLY ADJUSTABLE VEHICLE SEAT WITH A MEMORY DEVICE
SIÈGE DE VÉHICULE RÉGLABLE LONGITUDINALEMENT ÉQUIPÉ D'UN DISPOSITIF DE MÉMOIRE

(30) Priorität: 07.05.2011 DE 102011100866
(43) Veröffentlichungstag der Anmeldung: 19.03.2014
(73) Patentinhaber: Johnson Controls Components GmbH & Co. KG, 67657 Kaiserslautern (DE)
(72) Erfinder: UTZINGER, Karl, 66919 Weselberg (DE)
(74) Vertreter: Finger, Catrin
(86) Internationale Anmeldenummer: PCT/EP2012/058062
(87) Internationale Veröffentlichungsnummer: WO 2012/152634

(56) Entgegenhaltungen:
- EP-B1- 1 390 226
- DE-A1- 10 127 152

## Beschreibung

Die Erfindung betrifft einen längseinstellbaren Fahrzeugsitz mit einer Memoryvorrichtung mit den Merkmalen des Oberbegriffs des Anspruches 1.

Die EP 1 390 226 B1 beschreibt einen Kraftfahrzeugsitz mit einem Sitzgestell, einer Rückenlehne, die schwenkbar an dem Sitzgestell gelagert ist und die in einem entriegelten Zustand aus ihrer Gebrauchsposition heraus in Richtung auf eine Sitzfläche des Sitzgestells vorklappbar ist, einer Längsführung mit der das Sitzgestell zur Einstellung der Sitzlängsposition in Sitzlängsrichtung bewegbar ist, einer Feststellvorrichtung zum Arretieren des Sitzgestells in einer zuvor eingestellten Sitzlängsposition, einem Koppelmechanismus, der auf die Feststellvorrichtung einwirkt und diese entriegelt, wenn die Rückenlehne in Richtung auf die Sitzfläche vorgeklappt ist, so dass das Sitzgestell mit vorgeklappter Rückenlehne in Sitzlängsrichtung verschiebbar ist, und einer Memoryvorrichtung, mittels der das Sitzgestell bei einer Bewegung in Sitzlängsrichtung automatisch in einer einstellbaren, als Memory-Position definierten Sitzlängsposition angehalten werden kann. Hierbei ist an einer Schiene der Längsführung, die das Sitzgestell trägt und gemeinsam mit diesem in Schienenlängsrichtung beweglich ist, ein Betätigungsmechanismus vorgesehen, der mit einer Lehnenentriegelung für die vorgeklappte Rückenlehne in Wirkverbindung steht und der beim Erreichen der Memory-Position des Sitzgestells die Lehnenentriegelung betätigt, so dass die Rückenlehne in eine Gebrauchsposition geklappt werden kann. Ferner weist der Betätigungsmechanismus ein Auslöseelement auf, das beim Erreichen der Memory-Position mit der Memoryvorrichtung in Wirkverbindung tritt und dadurch den Betätigungsmechanismus auslöst und das über eine Hebelanordnung mit einem Zugmittel verbunden ist, das mit der Lehnenentriegelung gekoppelt ist. Hierbei ist der Betätigungsmechanismus samt Hebelanordnung relativ kompliziert ausgebildet. Die Memoryvorrichtung umfasst hierbei eine unterschienenfeste Stoppschiene mit Rastöffnungen mit welcher eine an einem Gleiter beweglich gelagerte Sperrklinke zusammenwirkt. Die Sperrklinke ist hierbei um eine in y-Richtung verlaufende Schwenkachse verschwenkbar ausgebildet, wobei der Eingriff eines Rasthakens der Sperrklinke in die Stoppschiene in im Wesentlichen vertikaler Richtung erfolgt. Die Verriegelung der Memoryvorrichtung erfolgt durch das Vorklappen der Lehne in Richtung Sitzfläche, wobei in dieser Phase aufgrund des Verriegelns der Feststellvorrichtung noch kein Verschieben des Fahrzeugsitzes möglich ist.

Eine weitere Memoryvorrichtung ist aus der dem Oberbegriff entsprechenden DE 101 27 152 A1 bekannt.

Der Erfindung liegt die Aufgabe zu Grunde, einen Fahrzeugsitz mit einer Memoryvorrichtung der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Erfindungsgemäß ist hierbei ein Sperrelement vorgesehen, das eine am Gleiter angeordnete Rampe mit einem oberen Bereich aufweist, mit welcher ein Abtaster der Memoryvorrichtung zusammenwirkt, wobei der Abtaster mit der Übertragungsanordnung verbunden ist. Die Übertragungsanordnung ist ihrerseits vorzugsweise mit einer Komfortverriegelung der Lehne verbunden, d.h. die Lehne wird zum Einnehmen der Einstiegsstellung in vorgeklappter Stellung verriegelt.

Bevorzugt weist die Rampe einen Winkel zur ersten Sitzschiene von weniger als 45°, insbesondere von maximal 30°, und einen parallel zur ersten Sitzschiene verlaufenden oberen Bereich auf.

Die Aktivierung der Entriegelung der Verriegelungsvorrichtung durch das Vorklappen der Lehne und das Aktivieren der Verriegelung der Lehne in vorgeklappter Stellung erfolgt bevorzugt nach einer Verschiebebewegung des Fahrzeugsitzes nach vorn.

Insbesondere erfolgt das Verriegeln der Lehne in vorgeklappter Stellung während des Herabgleitens des Abtasters über die Rampe, spätestens direkt beim Verlassen der Rampe.

Das Entriegeln der Lehne in vorgeklappter Stellung erfolgt bevorzugt nach dem Erreichen der Rampe durch den Abtaster und während des Hinaufgleitens durch den Abtaster entlang der Rampe, spätestens aber beim Erreichen des oberen Bereichs der Rampe.

Besonders bevorzugt ist das Sperrelement normalerweise in einer verriegelten Stellung und wird bei einer Längseinstellung des Fahrzeugsitzes entriegelt und über Anschläge mitgenommen, wobei der Abtaster während einer Längseinstellung des Fahrzeugsitzes in Anlage an den oberen Bereich der Rampe verbleibt.

Insbesondere bevorzugt sieht der Abtaster eine direkte 1:1 Druckübertragung an die Verriegelung der Lehne in der Einstiegsstellung vor.

Erfindungsgemäss ist die Sperrklinke um eine vertikale Schwenkachse verschwenkbar am Gleiter angebracht und wirkt zur Speicherung der Memoryposition mit an der Stoppschiene seitlich angeordneten Rastöffnungen zusammen. Dies ermöglicht eine sehr geringe Bauhöhe.

Das Sperrelement weist einen in vertikaler Richtung vorstehenden Anschlag auf, welcher durch die Schwenkachse der Sperrklinke gebildet ist.

Ein Fahrzeugsitz mit einer entsprechenden Memoryvorrichtung kann beispielsweise bei einem Personenkraftfahrzeug oder einem Nutzfahrzeug verwendet werden, wobei es sich nicht notwendigerweise um den Fahrersitz handeln muss. Ein derartiger Fahrzeugsitz ist vorzugsweise in einer vorderen Sitzreihe vorgesehen, er kann aber auch in einer mittleren oder hinteren Sitzreihe vorgesehen sein, beispielsweise auch bei einen Van.

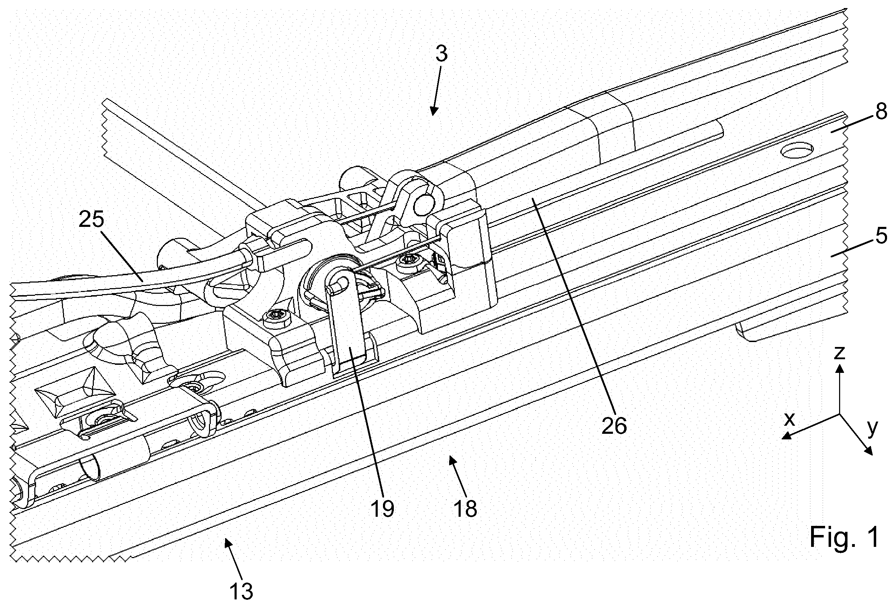

Im Folgenden ist die Erfindung anhand zweier Ausführungsbeispiele unter Bezugnahme auf die Zeichnung, näher erläutert. Es zeigen
- Fig. 1: eine perspektivische ausschnittsweise Ansicht eines Längseinstellers mit Verriegelungs- und Memoryvorrichtung gemäß dem ersten Ausführungsbeispiel in verriegelter Stellung,

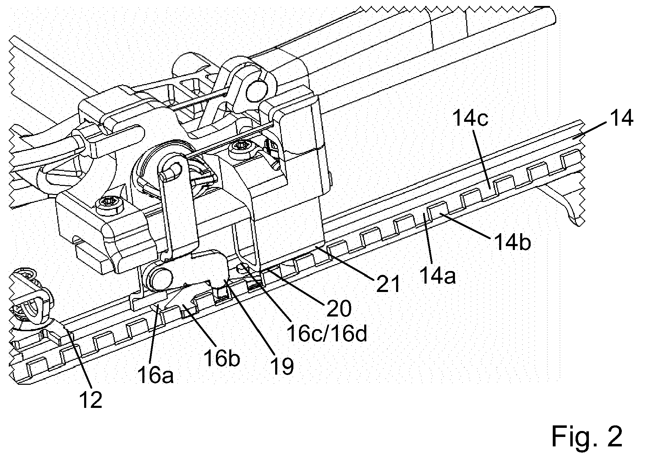

- Fig. 2: eine Fig. 1 entsprechende Ansicht ohne Darstellung der Sitzschienen,

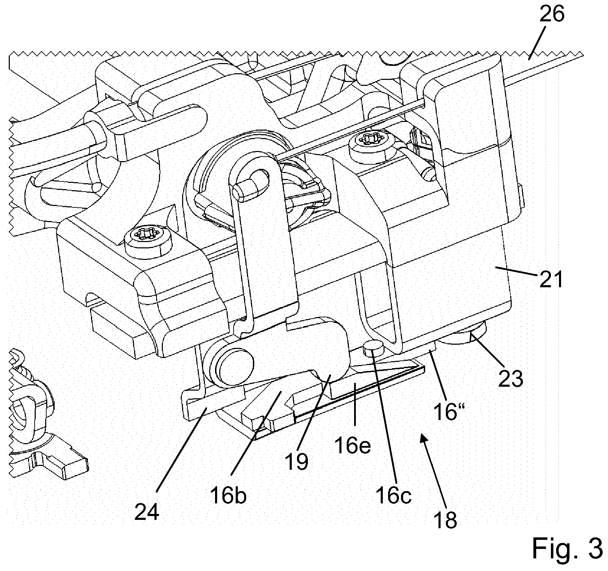

- Fig. 3: eine Fig. 2 entsprechende perspektivische Ansicht ohne Stoppschiene,

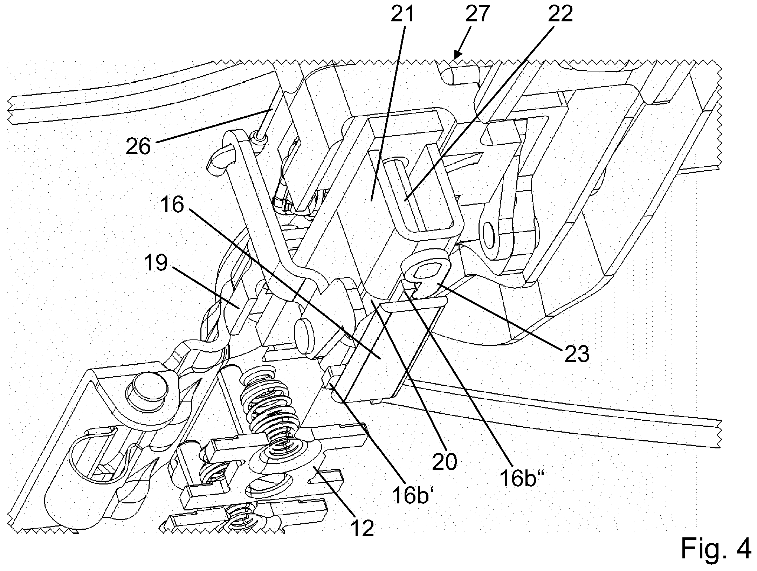

- Fig. 4: eine perspektivische Ansicht von Verriegelungs- und Memoryvorrichtung von schräg unten,
- Fig. 5: eine perspektivische Ansicht von Verriegelungs- und Memoryvorrichtung samt Stoppschiene in verriegelter Stellung,
- Fig. 6: eine perspektivische Ansicht von Verriegelungs- und Memoryvorrichtung samt Stoppschiene in vom Bediener am Griff entriegelter Stellung,
- Fig. 7: eine Fig. 6 entsprechende Ansicht ohne Gehäuse,
- Fig. 8: eine Detailansicht von Fig. 7,
- Fig. 9: eine Fig. 8 entsprechende Ansicht mit Gehäuse,
- Fig. 10: eine perspektivische Ansicht von Verriegelungs- und Memoryvorrichtung samt Stoppschiene aber ohne Gehäuse in einer vorderen, unverriegelten Stellung,
- Fig. 11: eine perspektivische Ansicht von Verriegelungs- und Memoryvorrichtung samt Stoppschiene aber ohne Gehäuse in der vordersten, verriegelten Stellung,
- Fig. 12: eine perspektivische Ansicht von Verriegelungs- und Memoryvorrichtung samt Stoppschiene in entriegelter Stellung mit zum Einnehmen der Einstiegsstellung vorgeschwenkter Lehne,
- Fig. 13: eine Fig. 12 entsprechende Ansicht ohne Gehäuse,
- Fig. 14: eine perspektivische Ansicht von Verriegelungs- und Memoryvorrichtung samt Stoppschiene in entriegelter Stellung mit zum Einnehmen der Einstiegsstellung vorgeschwenkter Lehne beim Verlassen der zu speichernden Sitzposition,
- Fig. 15: eine perspektivische Ansicht von Verriegelungs- und Memoryvorrichtung samt Stoppschiene in vorderster Sitzposition bei entriegelter Sitzschiene,
- Fig. 16: eine perspektivische Ansicht von Verriegelungs- und Memoryvorrichtung samt Stoppschiene in entriegelter Stellung mit zum Einnehmen der Einstiegsstellung vorgeschwenkter Lehne kurz vor dem Erreichern der gespeicherten Sitzposition,
- Fig. 17: eine perspektivische Ansicht von Verriegelungs- und Memoryvorrichtung samt Stoppschiene in verriegelter Stellung nach dem Erreichern der gespeicherten Sitzposition,
- Fig. 18: eine Fig. 17 entsprechende Ansicht ohne Gehäuse, wobei die Sperrklinke nicht eingefallen dargestellt ist,
- Fig. 19: einen Sonderfall, wenn die Sperrklinke aufgrund eines Auftreffens auf einen Zahn nicht sofort eingreifen kann,
- Fig. 20: das Eingreifen der Sperrklinke in die nächste Rastöffnung,
- Fig. 21: eine perspektivische Ansicht des Sperrelements ohne Bolzen/Anschlag,
- Fig. 22: eine perspektivische Ansicht der Sperrklinke des Sperrelements von Fig. 21,
- Fig. 23: eine schematische Ansicht eines Fahrzeugsitzes mit einem Längseinsteller samt erfindungsgemäßer Verriegelungs- und Memoryeinrichtung,
- Fig. 24: eine perspektivische Ansicht einer Memoryvorrichtung samt Stoppschiene gemäß dem zweiten Ausführungsbeispiel in der verriegelten Stellung,
- Fig. 25: eine perspektivische Ansicht der Memoryvorrichtung von Fig. 24 samt Stoppschiene in entriegelter Stellung mit zum Einnehmen der Einstiegsstellung vorgeschwenkter Lehne nach dem Verlassen der zu speichernden Sitzposition,
- Fig. 26: eine perspektivische Ansicht der Memoryvorrichtung gemäß dem zweiten Ausführungsbeispiel ohne Stoppschiene,
- Fig. 27: eine andere seitliche perspektivische Ansicht der Memoryvorrichtung gemäß dem zweiten Ausführungsbeispiel ohne Stoppschiene, und
- Fig. 28: eine perspektivische Ansicht von schräg oben der Memoryvorrichtung gemäß dem zweiten Ausführungsbeispiel ohne Stoppschiene.

Ein Fahrzeugsitz 1 eines Kraftfahrzeuges weist einen Längseinsteller 3 auf, mittels dessen der Fahrzeugsitz 1 längseinstellbar ist, d.h. dessen Sitzlängsposition in Sitzlängsrichtung x (x-Richtung) einstellbar ist. Die Sitzlängsrichtung x verläuft in der Regel parallel zur Fahrtrichtung. Die Querrichtung wird im Folgenden auch als y-Richtung und die vertikale Richtung als z-Richtung bezeichnet.

Der manuell betätigbare Längseinsteller 3 weist auf beiden Fahrzeugsitzseiten je eine erste Sitzschiene 5, die mit der Fahrzeugstruktur des Kraftfahrzeuges verbunden wird, und je eine zweite Sitzschiene 8 auf, die relativ zur zugeordneten ersten Sitzschiene 5 in Sitzlängsrichtung x verschieblich und mit dieser ersten Sitzschiene 5 verriegelbar ist. Dabei umgreifen sich die erste Sitzschiene 5 und die zweite Sitzschiene 8 gegenseitig mit ihren im Wesentlichen U-förmigen Profilen mit nach innen bzw. nach außen gebogenen Längsrändern unter Zwischenlage von nicht näher dargestellten Kugeln. Die Kugeln dienen sowohl der gegenseitigen Führung als auch der Verringerung der Reibung zwischen den Sitzschienen 5 und 8. Im vorliegenden Ausführungsbeispiel sind auf jeder Fahrzeugsitzseite in jeder der vier Ecken des gemeinsamen Sitzschienenprofils der beiden metallischen Sitzschienen 5 und 8 zwei Pakete zu je drei Kugeln mit bestimmten Abständen in Sitzlängsrichtung x hintereinander angeordnet, wobei die metallischen Kugeln von insgesamt zwei Kugelhalten aus Kunststoff gehalten werden.

Zum Verriegeln von erster Sitzschiene 5 und zweiter Sitzschiene 8 sind auf jeder Fahrzeugsitzseite vorliegend drei Rastplatten 12 vorgesehen, welche jeweils in der Verriegelungsrichtung z in der zweiten Sitzschiene 8 beweglich geführt sind und zum Zusammenwirken mit der ersten Sitzschiene 5 ausgebildet sind. In Hinblick auf die Funktion der Rastplatten 12 in Verbindung mit den Sitzschienen 5, 8 als Verriegelungsvorrichtung 13 sei auf die DE 100 50 959 B4 verwiesen.

Innerhalb der ersten Sitzschiene 5 ist eine Stoppschiene 14 angeordnet, welche etwas seitlich senkrecht nach oben gebogene Längsränder aufweist, von denen einer innerhalb des normalen Einsitzbereichs des Fahrzeugsitzes 1 mit Rastöffnungen 14a ausgebildet ist. Der entsprechende Längsrand ist vorliegend mit rechteckförmigen Zähnen ausgebildet, wobei die Rastöffnungen 14a durch die Zwischenräume zwischen zwei Zähnen 14b gebildet sind, jedoch können die Rastöffnungen 14a auch eine beliebige andere geeignete Gestalt haben, beispielsweise durch Bohrungen, Langlöcher, rechteckförmige Durchbrüche, gebildet sein.

Die Stoppschiene 14 weist einen ebenen Boden 14c auf, und die beiden Längsränder bilden Führungen für ein in Sitzlängsrichtung x verschiebbar hierin geführtes Sperrelement 16.

Das Sperrelement 16 ist durch einen Gleiter 16a, eine Sperrklinke 16b, welche um einen in z-Richtung verlaufenden Bolzen 16c verschwenkbar ist, einen Anschlag 16d, der durch ein vorstehendes Ende des Bolzens 16c gebildet ist, und eine Rampe 16e mit einem - zur Rampe 16e gehörenden - waagerecht verlaufenden, oberen Bereich 16f gebildet. Die Rampe 16e erstreckt sich, ausgehend von - in Längsrichtung betrachtet - etwa der Höhe des Bolzens 16c bis etwa zur Mitte des Abstands Bolzen-vorderes Ende, wobei sich der schräg verlaufende Bereich der Rampe 16e über etwa 2/3 und der waagerecht verlaufende, obere Bereich 16f der Rampe 16e über etwa 1/3 der Gesamtlänge der Rampe 16e erstreckt. Die Sperrklinke 16b ist derart ausgebildet, dass ein vorstehendes Sperrende 16b' in die Rastöffnungen 14a eingreifen kann, wenn die Sperrklinke 16b um den Bolzen 16c in Schließrichtung gedreht ist. Zum Drehen der Sperrklinke 16b ist am vom Sperrende 16b' entfernten Ende ein Hebelarm 16b" ausgebildet. Ferner ist auf der Rückseite des Sperrendes 16b' eine Schräge 16b"' vorgesehen. In verriegelter Stellung der Sperrklinke 16b liegt eine Seite derselben an einer Seite der Rampe 16e an, wobei in dieser Stellung das Sperrende 16b' über den Gleiter 16a seitlich mit einem im Wesentlichen quaderförmigen Bereich übersteht. Mit diesem quaderförmigen Bereich ist die Sperrklinke 16b in ihrer verriegelten Stellung in Eingriff in eine der Rastöffnungen 14a der Stoppschiene 14. Die Sperrklinke 16b ist in Richtung der Verriegelungsstellung mittels einer nicht dargestellten Feder vorgespannt, d.h. es erfolgt automatisch ein Verriegeln, wenn keine entriegelnde Kraft auf den Hebelarm 16b" wirkt. Dies ermöglicht eine weniger gespannte Anordnung der die Sperrklinke 16b vorspannenden Feder, d.h. eine Entlastung derselben, während der normalen Benutzung des Fahrzeugsitzes 1.

Das Sperrelement 16 bildet einen wesentlichen Bestandteil einer Memoryvorrichtung 18. Mit dem Sperrelement 16 wirken verschiedene weitere Elemente der Memoryvorrichtung 18 zusammen. So ist als weiterer Bestandteil der Memoryvorrichtung 18 ein Abtaster 19 vorgesehen, welcher mit der Rampe 16e und deren oberem Bereich 16f zusammenwirkt und das Vorhandensein des Sperrelements 16 ermittelt. Ferner ist als weiterer

Bestandteil der Memoryvorrichtung 18 ein Memoryanschlag 20 vorgesehen, welcher mit dem Anschlag 16d, gebildet durch das Ende des Bolzens 16c, zusammenwirkt. Der Memoryanschlag 20 ist durch ein in Schienenlängsrichtung hinten angeordnetes Ende eines bügelartigen Gehäuses 21 gebildet, durch welches eine drehbare Welle 22 verläuft, an deren unterem Ende ein Betätigungshebel 23 angeordnet ist, welcher ein weiterer Bestandteil der Memoryvorrichtung 18 ist und mit dem Hebelarm 16b" der Sperrklinke 16b zusammenwirken kann, um die Sperrklinke 16b außer Eingriff zu bringen. Der Memoryanschlag 20 dient auch dazu, das Sperrelement 16 bei entriegelter Sperrklinke 16b im Falle einer Längseinstellung des Fahrzeugsitzes 1 entgegen der Fahrtrichtung mitzunehmen. Ein Mitnehmer 24, welcher vorliegend benachbart des Abtasters 19 angeordnet ist, nimmt das Sperrelement 16 bei entriegelter Sperrklinke 16b im Falle einer Längseinstellung des Fahrzeugsitzes 1 in Fahrtrichtung mit, wobei der Mitnehmer 24 im Falle einer Längsverschiebung des Fahrzeugsitzes bei entriegeltem Sperrelement 16 in der Nähe des Sperrendes 16b', vorliegend im Bereich der Schräge 16b"' der Sperrklinke 16b, in Anlage gelangt.

Ferner sind zwei Übertragungsanordnungen 25, 26 vorgesehen, welche vorliegend beide durch Bowdenzüge gebildet sind. Die erste Übertragungsanordnung 25 sieht eine direkte Übertragung einer Schwenkbewegung der Lehne des Fahrzeugsitzes 1 an die Rastplatten 12 vor, d.h. die Verriegelungsvorrichtung 13 wird bei einer Betätigung derselben entriegelt. Die zweite Übertragungsanordnung 26 sieht eine Übertragung einer Bewegung des Abtasters 19 an eine nicht näher dargestellte Verriegelung am Lehneneinsteller vor, um den in der Einstiegsstellung verriegelten Lehneneinsteller zu entriegeln, d.h. in diesem Fall wird bei einer Bewegung des Abtasters 19 signalisiert, dass der Fahrzeugsitz 1 nach einem Einnehmen der Einstiegsstellung wieder in seiner Ausgangsstellung ist, so dass die Lehnenverriegelung entriegelt wird und die Lehne wieder in die normale (Ausgangs-)Stellung zurückgeklappt werden kann.

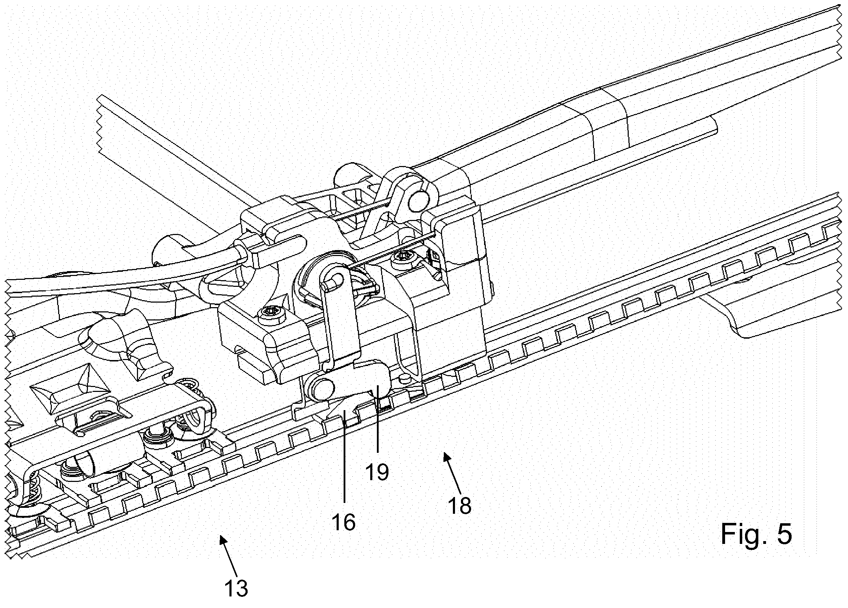

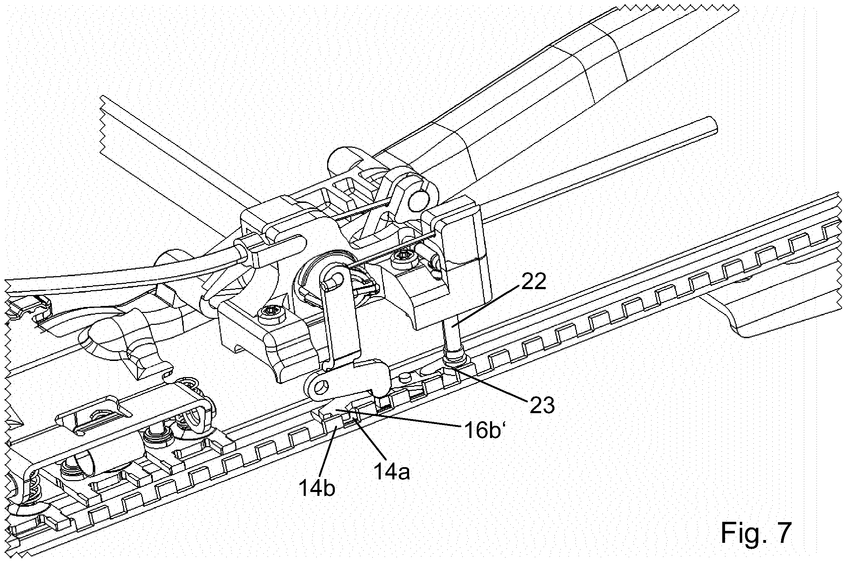

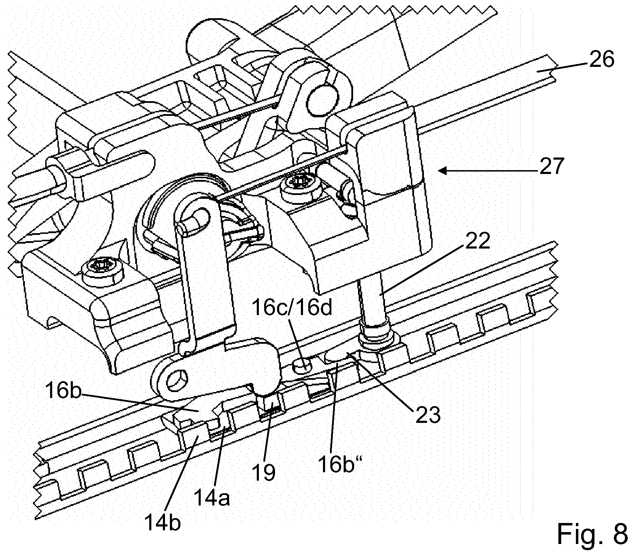

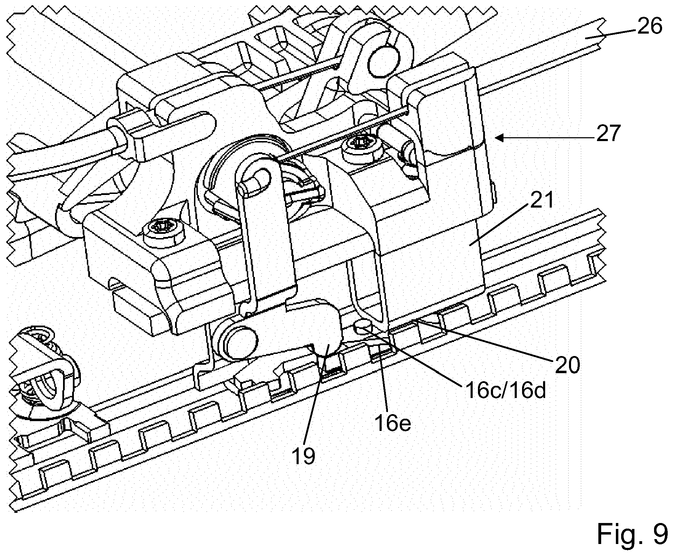

Im Folgenden wird unter Bezugnahme auf die Figuren 5 bis 11 die Funktion der Memoryvorrichtung 18 bei einer normalen Längseinstellbewegung des Fahrzeugsitzes 1 näher beschrieben.

In der in Fig. 5 dargestellten Ausgangsstellung ist mindestens eine der oberschienenfesten Rastplatten 12 der Verriegelungsvorrichtung 13 in Eingriff in entsprechende Rasten der unteren, ersten Sitzschiene 5 und das Sperrelement 16 der Memoryvorrichtung 18 befindet sich in seiner verriegelten Stellung, d.h. das Sperrende 16b' der Sperrklinke 16b greift in eine Rastöffnung 14a der Stoppschiene 14 ein und sichert das Sperrelement 16 gegen ein Verschieben in Sitzlängsrichtung innerhalb der Stoppschiene 14.

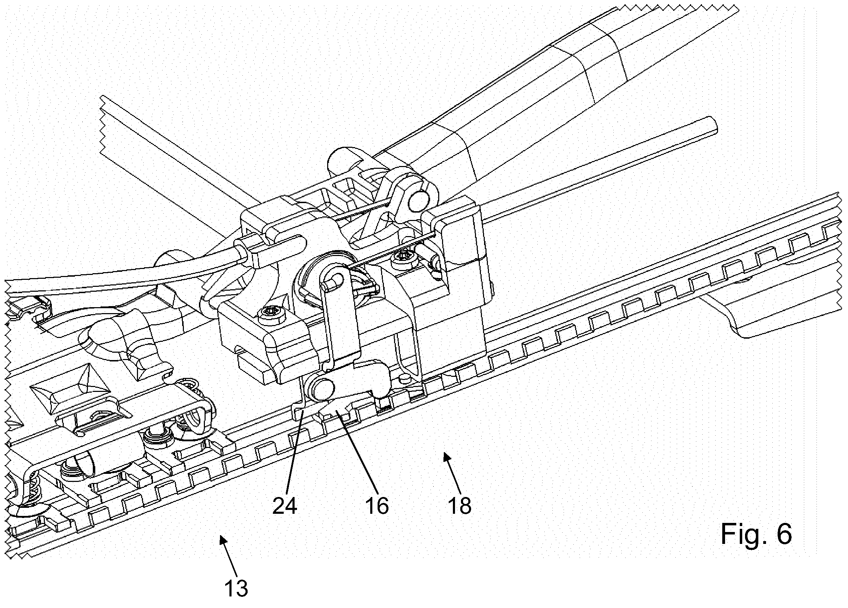

Soll der Fahrzeugsitz 1 zur Verstellung seiner Längsposition und unter Beibehaltung der aufrechten Stellung der Lehne verschoben werden, so wird in einem ersten Schritt ein Griff A, welcher üblicherweise am vorderen Ende des Fahrzeugsitzes angeordnet ist, betätigt, wodurch die Verriegelungsvorrichtung 13 entriegelt wird, d.h. die Rastplatten 12 außer Eingriff gelangen, solange der Griff A betätigt ist und vom Benutzer eine entsprechende Kraft ausgeübt wird. Aufgrund der Betätigung des Griffs A erfolgt über eine dritte Übertragungsanordnung 27 ein Drehen der Welle 22 und damit des Betätigungshebels 23, welcher bei seiner Drehbewegung den Hebelarm 16b" mitnimmt und dadurch die Sperrklinke 16b des Sperrelements 16 außer Eingriff mit der Rastöffnung 14a bringt, so dass das Sperrelement 16 nicht mehr verriegelt ist, wie in Fig. 6 bis 9 dargestellt.

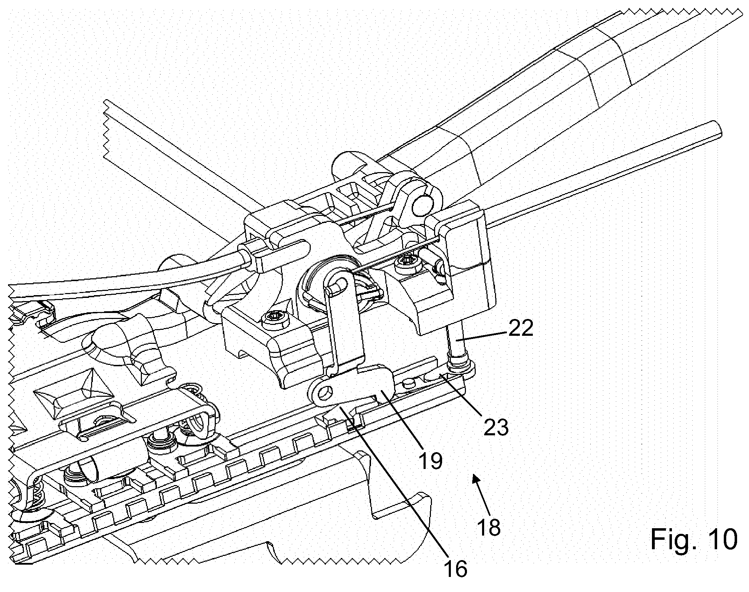

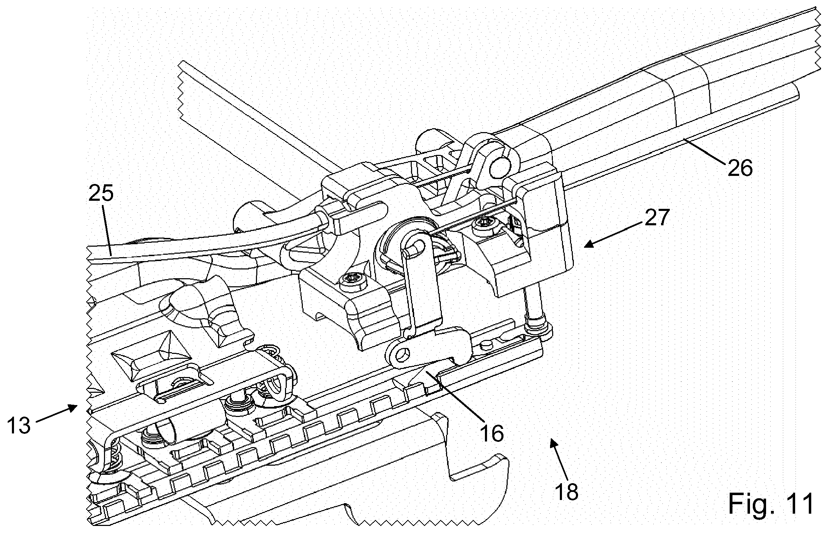

Der Fahrzeugsitz 1 wird vorliegend nach vorn in seine vorderste Stellung verschoben (vgl. Fig. 10 und 11), wobei das Sperrelement 16 durch den Mitnehmer 24 mitgenommen wird. Hierbei behält die Sperrklinke 16b ihre entriegelte Stellung bei, da der Betätigungshebel 23 beständig auf den Hebelarm 16b" drückt. Wird in der Sitzsollstellung der Griff A losgelassen, verriegelt die Verriegelungsvorrichtung 13 wieder, d.h. der Fahrzeugsitz 1 ist nicht mehr in seiner Längsposition veränderbar. Gleichzeitig dreht sich der Betätigungshebel 23 zurück in seine Ausgangsstellung und gibt dadurch die Sperrklinke 16b des Sperrelements 16 frei, welche aufgrund der Federvorspannung gegen den nächsten Zahn 14b der Stoppschiene 14 drückt (Stellung von Fig. 10) oder direkt in eine Rastöffnung 14a einfällt (Stellung von Fig. 11) und dadurch die Fahrzeugsitzstellung speichert. Ist die Sperrklinke 16b in Anlage an einen Zahn 14b der Stoppschiene 14, so erfolgt aufgrund der Federvorspannung ein Einfallen in die nächste Rastöffnung 14a in Bewegungsrichtung und damit ein Speichern dieser Fahrzeugsitzstellung, welche annähernd der ursprünglich verriegelten Fahrzeugsitzstellung entspricht, sobald das Sperrelement 16 aufgrund einer Fahrzeugsitzverschiebung ohne Betätigung des Griffs A eingreift.

Wird der Fahrzeugsitz 1 nach hinten verschoben, so übernimmt die Mitnehmerfunktion das Gehäuse 21 mit seinem Memoryanschlag 20, welcher am durch den Bolzen 16c gebildeten Anschlag 16d anliegt. Ansonsten entspricht die Funktion der soeben beschriebenen.

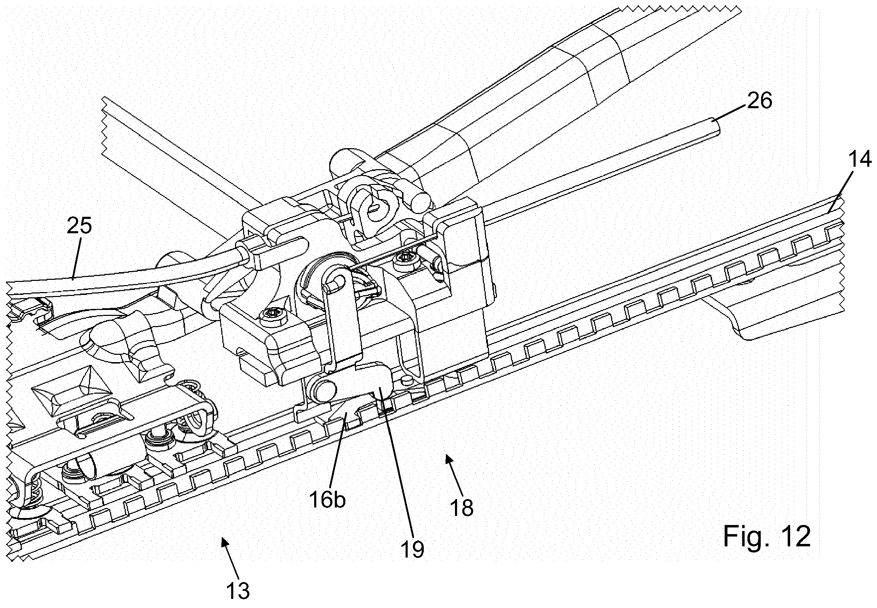

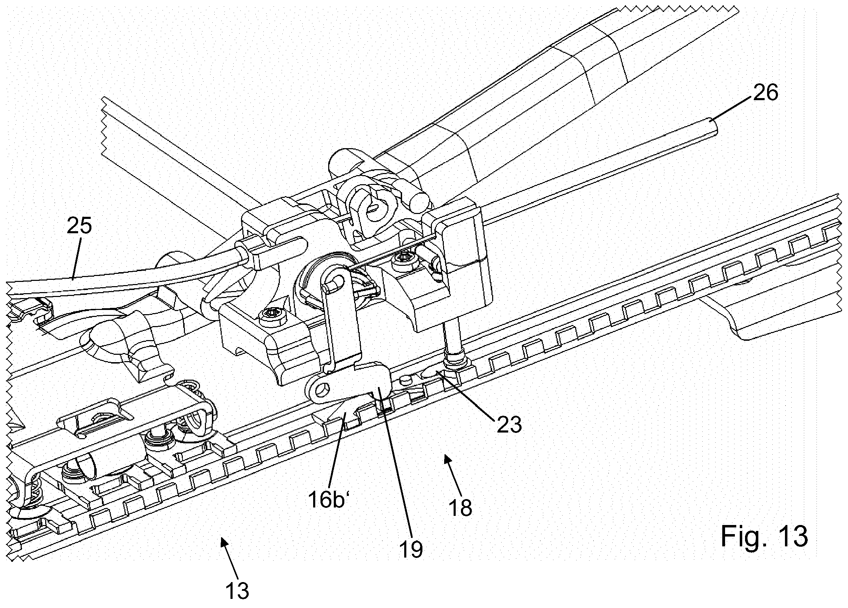

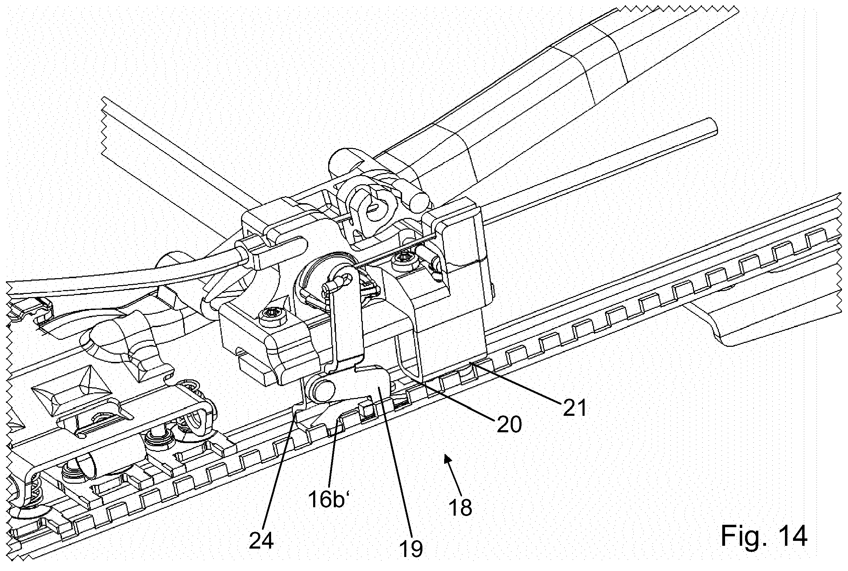

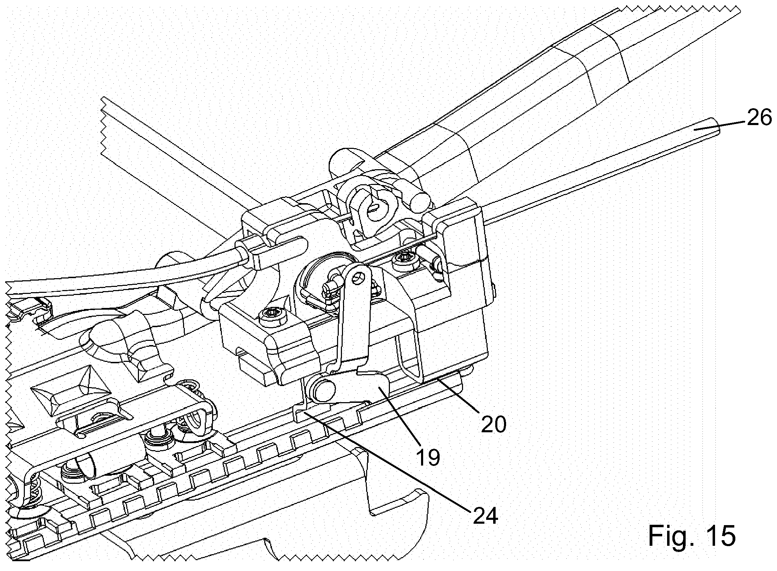

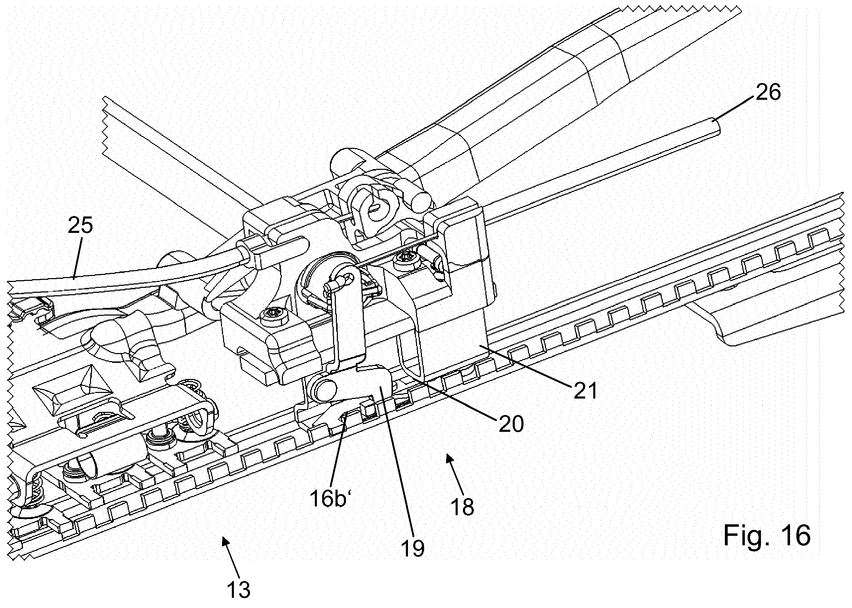

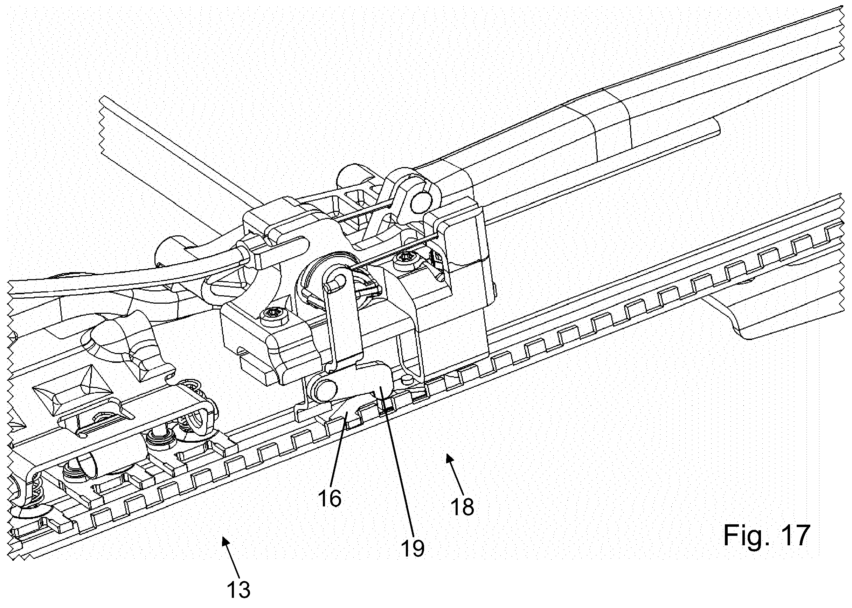

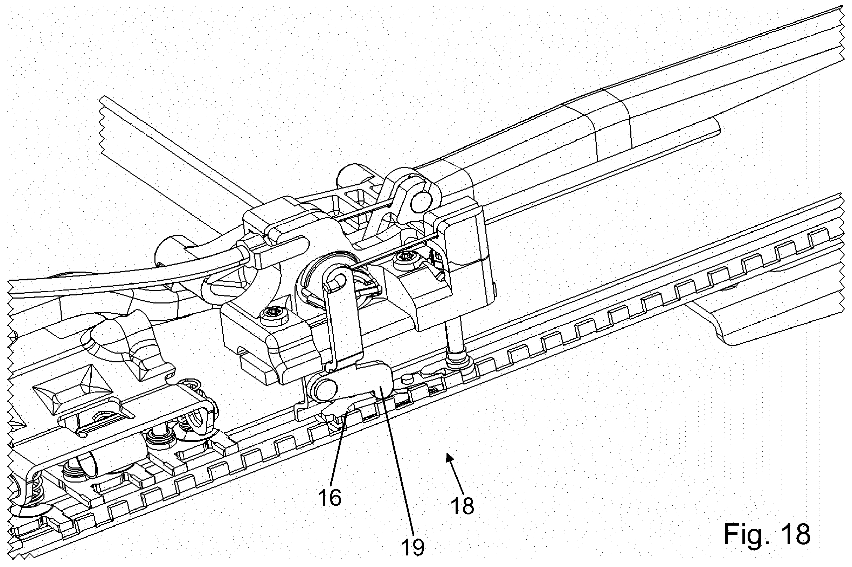

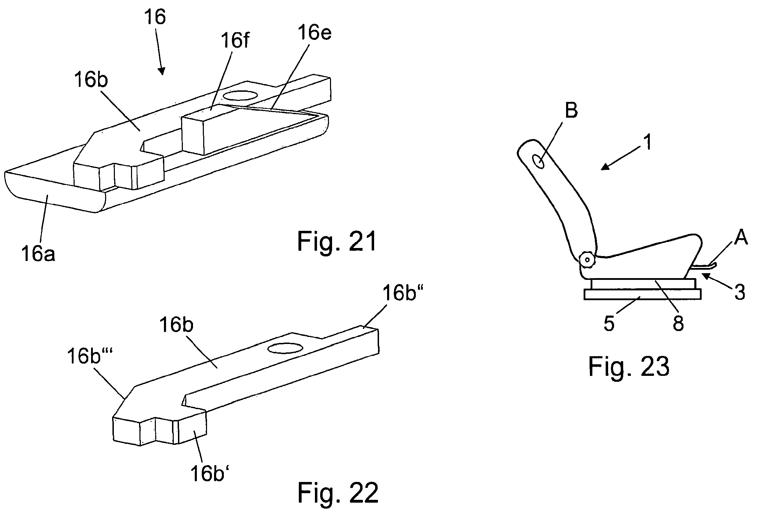

Im Folgenden wird unter Bezugnahme auf die Figuren 12 bis 20 die Funktion der Memoryvorrichtung 18 im Falle eines Einnehmens einer Einstiegsstellung, d.h. eines Vorklappens der Lehne bei Betätigung eines an der Außenseite der Lehne angeordneten Hebels B (siehe Fig. 23) in Verbindung mit einem Entriegeln der Verriegelungsvorrichtung 13 und einem Vorfahren des Fahrzeugsitzes 1 in die vorderste Stellung, beschrieben.

In der in Fig. 12 dargestellten Ausgangsstellung ist mindestens eine der oberschienenfesten Rastplatten 12 der Verriegelungsvorrichtung 13 in Eingriff in entsprechende Rasten der unteren, ersten Sitzschiene 5 und das Sperrelement 16 der Memoryvorrichtung 18 befindet sich in seiner verriegelten Stellung, d.h. das Sperrende 16b' der Sperrklinke 16b greift in eine Rastöffnung 14a der Stoppschiene 14 ein und sichert das Sperrelement 16 gegen ein Verschieben in Sitzlängsrichtung innerhalb der Stoppschiene 14. Erfolgt ein Vorklappen der Lehne, so wird, ausgelöst durch die Vorklappbewegung der Lehne, die Verriegelungsvorrichtung 13 gelöst.

Bewegt sich der Fahrzeugsitz 1 nach vorn, so gleitet der Abtaster 19 vom waagerechten oberen Bereich 16f über die Rampe 16e, welche vorliegend einen Winkel zur Sitzschiene 5 von weniger als 45° aufweist, nach unten und verlässt das Sperrelement 16. Ferner gelangt der Memoryanschlag 20 außer Kontakt mit dem Anschlag 16d des Sperrelements 16. Der Mitnehmer 24 gleitet seitlich am Sperrelement 16 vorbei, ohne es mitzunehmen. Das Herabgleiten ist mit einer leichten Schwenkbewegung des Abtasters 19 verbunden, welche an die zweite Übertragungsanordnung 26 weitergegeben wird. Aufgrund der Anordnung der Schwenkachse des Abtasters 19 und der Ausgestaltung des abtastenden Arms sowie des mit der Seele des Bowdenzugs der zweiten Übertragungsanordnung 26 verbundenen Arms ergibt sich eine Übersetzung, vorliegend im Verhältnis 2:1, wobei die Bewegung des Seelenendes etwa doppelt so groß wie die vom Abtaster 19 abgetastete Höhe der Rampe 16e ist. Die Hülle des Bowdenzugs der zweiten Übertragungsanordnung 26 stützt sich an einem Teil des oberschienenfesten Gehäuses 21 ab. Durch die Betätigung der zweiten Übertragungsanordnung 26 erfolgt eine sogenannte Komfort-Verriegelung der Lehne in vorgeklappter Stellung, wodurch sich der Fahrzeugsitz 1 leichter vor- und zurückschieben lässt.

Die Verriegelung der Lehne in vorgeklappter Stellung wird erst kurz vor einem Wiedererreichen der Memoryposition gelöst, nämlich wenn der Abtaster 19 die Rampe 16e hochgleitet und dadurch am Seelenende der zweiten Übertragungsanordnung 26 gezogen wird. Bei Erreichen der Memoryposition hat der Abtaster 19 bereits die maximale Höhe der Rampe 16e, d.h. den oberen Bereich 16f, erreicht, so dass die Komfort-Verriegelung der Lehne in dieser Stellung bereits gelöst ist. Kurz nach dem Erreichen der maximalen Höhe der Rampe 16e durch den Abtaster 19 gelangt der Memoryanschlag 20 am Gehäuse 21 in Kontakt mit dem durch den vorstehenden Bolzen 16c des Sperrelements 16 gebildeten Anschlag 16d, welcher die Bewegung des Fahrzeugsitzes 1 nach hinten stoppt. Die Verriegelung der Verriegelungsvorrichtung 13 erfolgt nach dem Zurückklappen der Lehne.

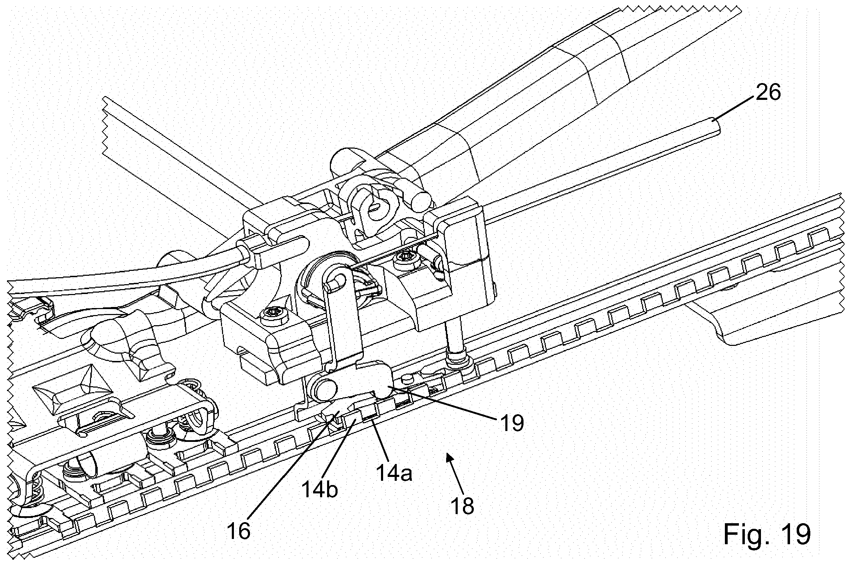

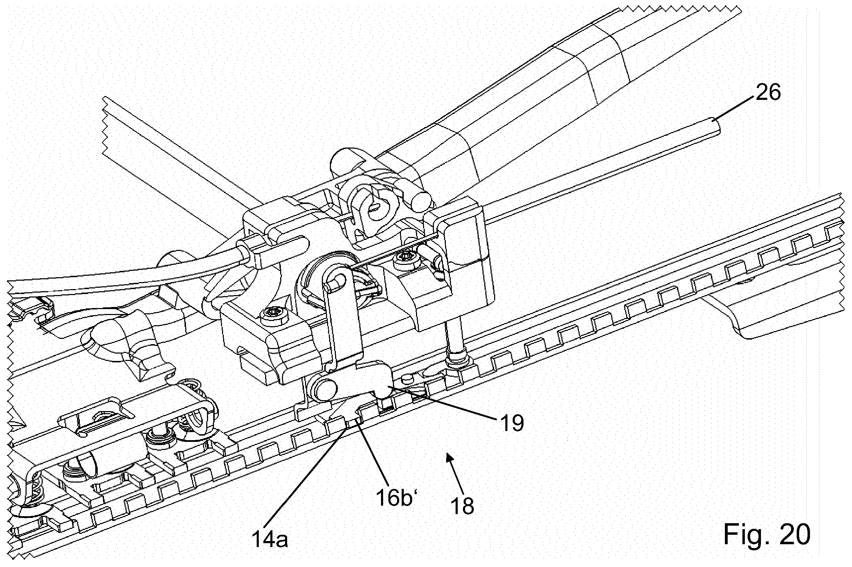

Falls das Sperrelement 16 als Ausgangsstellung in einer Nichteingriffsstellung ist, d.h. die Sperrklinke 16b unter Federvorspannung an einem Zahn 14b anliegt (vgl. Fig. 19), wird das Sperrelement 16 bis zur nächsten Rastöffnung 14a vom Mitnehmer 24 mitgenommen und greift aufgrund der Federvorspannung der Sperrklinke 16b und des freigegebenen Hebelarms 16b" mit dem Sperrende 16b' in diese Rastöffnung 14a ein, wodurch das Sperrelement 16 in dieser Stellung verriegelt ist (Fig. 20) und während der weiteren Verschiebung des Fahrzeugsitzes 1 nach vorn verbleibt. Das weitere Verfahren des Fahrzeugsitzes 1 in die Einstiegsstellung erfolgt wie vorstehend beschrieben. Als Memoryposition wird jedoch durch den Fahrzeugsitz 1 die Stellung eingenommen, in welcher die Sperrklinke 16b verriegelt hat, d.h. eine leicht nach vorn versetzte Stellung gegenüber der ursprünglichen Fahrzeugsitzstellung.

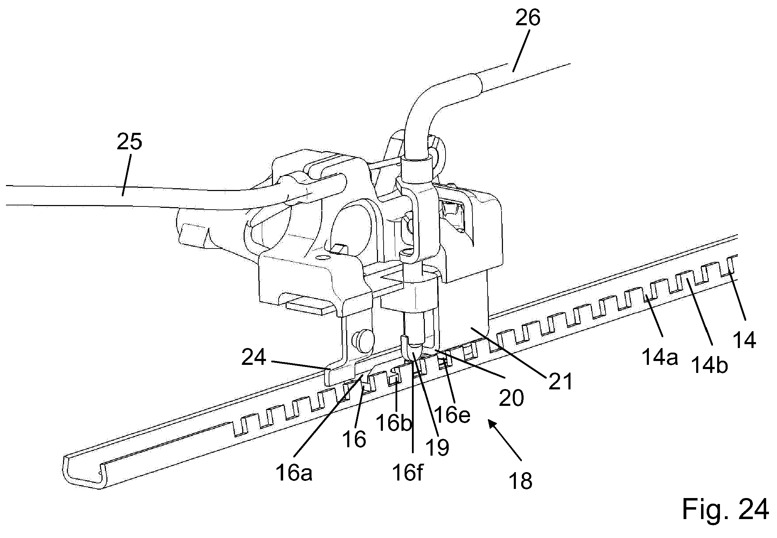

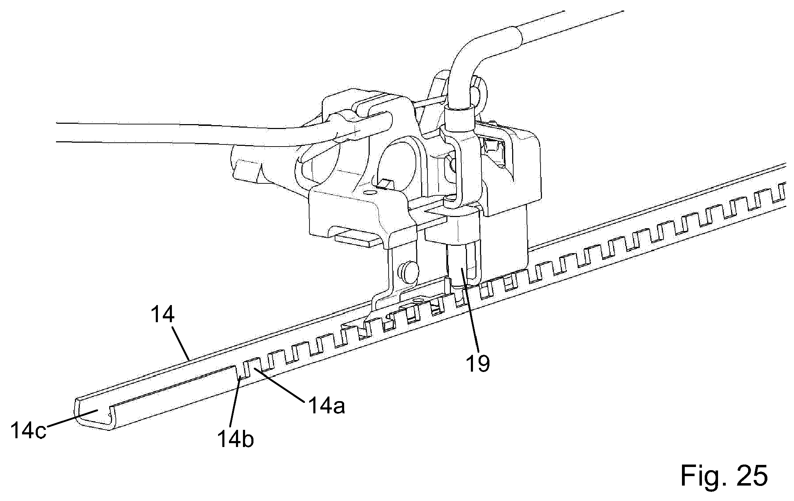

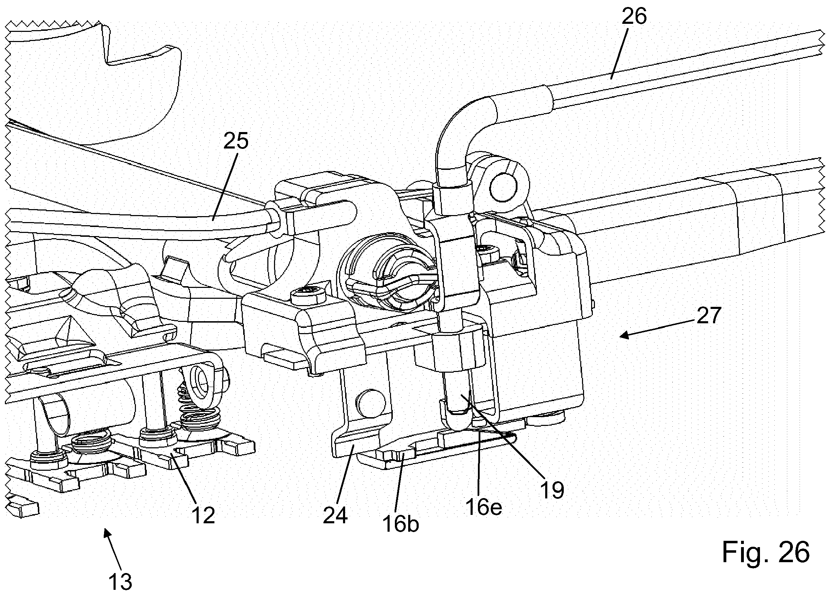

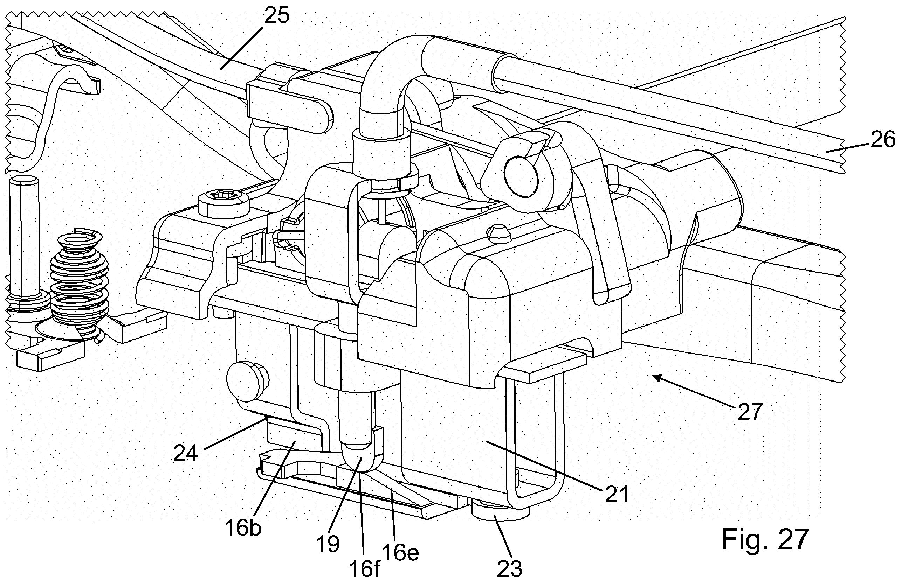

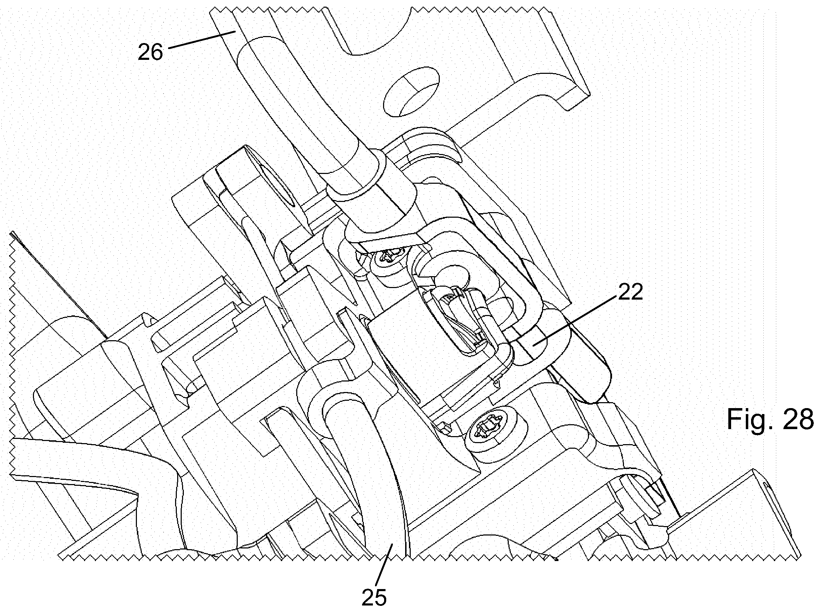

Im Folgenden wird unter Bezugnahme auf die Figuren 24 bis 28 das zweite Ausführungsbeispiel näher beschrieben. Hierbei unterscheidet sich das zweite Ausführungsbeispiel vom ersten Ausführungsbeispiel ausschließlich durch die Ausgestaltung der zweiten Übertragungsanordnung 26 und die Gestalt des Abtasters 19, so dass - sofern nachfolgend nicht ausdrücklich erwähnt - auf die Beschreibung des ersten Ausführungsbeispiels verwiesen wird, auch in Hinblick auf die Funktion. Ferner werden zum einfacheren Verständnis für gleiche oder gleichwirkende Elemente die gleichen Bezugszeichen wie beim ersten Ausführungsbeispiel verwendet.

Wesentlicher Unterschied zum ersten Ausführungsbeispiel ist, dass die zweite Übertragungsanordnung 26 einen direkt 1:1 übertragenden Abtaster 19 aufweist, welcher eine Schubbewegung (im Unterschied zur Zugbewegung der Seele des Bowdenzugs gemäß der verschwenkbar angeordneten Hebelarme des ersten Ausführungsbeispiels) überträgt, welche zur Verriegelung der Lehne genutzt wird. Der Abtaster 19 drückt aufgrund einer entsprechenden Vorbelastung nach unten und wird im Falle einer Längsverschiebung des Fahrzeugsitzes 1 ausgehend vom oberen Bereich 16f entlang der Rampe 16e nach unten verschoben, d.h. der Hub des Abtasters 19 (und damit die übertragene Stellbewegung) entspricht der Höhe der Rampe 16e.

Gemäß den in der Zeichnung dargestellten Ausführungsbeispielen ragt der obere, waagerechte Bereich 16f der Rampe 16e etwas über die Sperrklinke 16b hinaus, vorliegend um etwa 50% der Dicke der Sperrklinke 16b.

### Bezugszeichenliste

- 1: Fahrzeugsitz
- 3: Längseinsteller
- 5: erste Sitzschiene
- 8: zweite Sitzschiene
- 12: Rastplatte
- 13: Verriegelungsvorrichtung
- 14: Stoppschiene
- 14a: Rastöffnung
- 14b: Zahn
- 14c: Boden
- 16: Sperrelement
- 16a: Gleiter
- 16b: Sperrklinke
- 16b': Sperrende
- 16b": Hebelarm
- 16b"': Schräge
- 16c: Bolzen
- 16d: Anschlag
- 16e: Rampe
- 16f: oberer Bereich
- 18: Memoryvorrichtung
- 19: Abtaster
- 20: Memoryanschlag
- 21: Gehäuse
- 22: Welle
- 23: Betätigungshebel
- 24: Mitnehmer
- 25: erste Übertragungsanordnung
- 26: zweite Übertragungsanordnung
- 27: dritte Übertragungsanordnung

- A: Griff (Längseinsteller)
- B: Hebel (Lehnenentriegelung)
- x: x-Richtung, Sitzlängsrichtung
- y: y-Richtung, Querrichtung
- z: z-Richtung, Verriegelungsrichtung

## Patentansprüche

1. Längseinstellbarer Fahrzeugsitz (1) mit einer freischwenkbaren, vorklappbaren Lehne und einer Memoryvorrichtung (18),
wobei der Fahrzeugsitz (1) mindestens eine strukturfeste erste Sitzschiene (5), eine in dieser ersten Sitzschiene (5) geführte, mit dem Fahrzeugsitz (1) verbundene zweite Sitzschiene (8), und einen Längseinsteller (3) mit einer lösbaren Verriegelungsvorrichtung (13) zum Verriegeln der beiden Sitzschienen (5, 8) aufweist,
und der Fahrzeugsitz (1) unter Vorklappen seiner Lehne und Entriegeln der Verriegelungsvorrichtung (13) eine Einstiegsstellung einnehmen kann,
und wobei ferner besagte Memoryvorrichtung (18) zur Speicherung der Position der fahrzeugsitzfesten zweiten Sitzschiene (8) in Bezug auf die strukturfeste erste Sitzschiene (5) vorgesehen ist,
die Memoryvorrichtung (18) eine Stoppschiene (14) mit Rastöffnungen (14a) und ein Sperrelement (16) mit einem Gleiter (16a) und verschwenkbar hiermit verbundenen Sperrklinke (16b) aufweist,
und eine Übertragungsanordnung (26) vorgesehen ist, welche mit einer Komfort-Verriegelung einer Lehne des Fahrzeugsitzes (1) in einer Einstiegsstellung zusammenwirkt,
wobei
das Sperrelement (16) eine am Gleiter (16a) angeordnete Rampe (16e) mit einem oberen Bereich (16f) aufweist, mit welcher ein Abtaster (19) der Memoryvorrichtung (18) zusammenwirkt, und der Abtaster (19) mit der Übertragungsanordnung (26) verbunden ist und die Sperrklinke (16b) in Verriegelungsrichtung mittels einer Feder vorgespannt ist, **dadurch gekennzeichnet, dass** die Sperrklinke (16b) um eine vertikale Schwenkachse verschwenkbar am Gleiter (16a) angebracht ist und zur Speicherung der Memoryposition mit an der Stoppschiene (14) seitlich angeordneten Rastöffnungen (14a) zusammenwirkt, und
das Sperrelement (16) einen in vertikaler Richtung vorstehenden Anschlag (16d) aufweist, welcher durch die Schwenkachse der Sperrklinke (16b) gebildet ist.

2. Fahrzeugsitz nach Anspruch 1, **dadurch gekennzeichnet, dass** die Rampe (16e) einen Winkel zur ersten Sitzschiene (5) von weniger als 45°, insbesondere von maximal 30°, und einen parallel zur ersten Sitzschiene (5) verlaufenden oberen Bereich (16f) aufweist.

3. Fahrzeugsitz nach Anspruch 1 oder 2, **dadurch gekennzeichnet, dass** die Aktivierung der Entriegelung der Verriegelungsvorrichtung (13) durch das Vorklappen der Lehne und das Aktivieren der Verriegelung der Lehne in vorgeklappter Stellung nach einer Verschiebebewegung des Fahrzeugsitzes (1) nach vorn erfolgt.

4. Fahrzeugsitz nach Anspruch 3, **dadurch gekennzeichnet, dass** das Verriegeln der Lehne in vorgeklappter Stellung während des Herabgleitens des Abtasters (19) über die Rampe (16e), spätestens direkt beim Verlassen der Rampe (16e), erfolgt.

5. Fahrzeugsitz nach Anspruch 3 oder 4, **dadurch gekennzeichnet, dass** das Entriegeln der Lehne in vorgeklappter Stellung nach dem Erreichen der Rampe (16e) durch den Abtaster (19) und während des Hinaufgleitens durch den Abtaster (19) entlang der Rampe (16e), spätestens aber beim Erreichen des oberen Bereichs (16f) der Rampe (16e), erfolgt.

6. Fahrzeugsitz nach einem der vorhergehenden Ansprüche, **dadurch gekennzeichnet, dass** das Sperrelement (16) bei einer Längseinstellung des Fahrzeugsitzes entriegelt und über Anschläge (16d-20 oder 16b"'-24) mitgenommen wird, wobei der Abtaster (19) in Anlage an den oberen Bereich (16f) der Rampe (16e) verbleibt.

7. Fahrzeugsitz nach einem der vorhergehenden Ansprüche, **dadurch gekennzeichnet, dass** der Abtaster (19) eine direkte 1:1 Druckübertragung an die Verriegelung der Lehne in der Einstiegsstellung vorsieht.

## Claims

1. Longitudinally adjustable vehicle seat (1) with a freely pivotable backrest which is foldable forward and a memory device (18), wherein the vehicle seat (1) has at least one first seat rail (5) fixed to the structure, a second seat rail (8) guided in said first seat rail (5) and connected to the vehicle seat (1), and a longitudinal adjuster (3) with a releasable locking device (13) for locking the two seat rails (5, 8), and the vehicle seat (1) is able to adopt an entry position by folding forward its backrest and unlocking the locking device (13),
and wherein said memory device (18) is also provided for storing the position of the second seat rail (8) fixed to the vehicle seat relative to the first seat rail (5) fixed to the structure, the memory device (18) having a stop rail (14) with latching openings (14a) and a locking element (16) with a slider (16a) and a locking pawl (16b) pivotably connected thereto, and a transmission arrangement (26) is provided which cooperates with a comfort locking device of a backrest of the vehicle seat (1) in an entry position,
wherein
the locking element (16) has a ramp (16e) with an upper region (16f) arranged on the slider (16a) with which a scanner (19) of the memory device (18) cooperates, and the scanner (19) is connected to the transmission arrangement (26) and the locking pawl (16b) is pretensioned in the locking direction by means of a spring, **characterized in that** the locking pawl (16b) is pivotably attached to the slider (16a) about a vertical pivot axis and, for storing the memory position, cooperates with latching openings (14a) laterally arranged on the stop rail (14), and
the locking element (16) has a stop (16d) protruding in the vertical direction and which is formed by the pivot axis of the locking pawl (16b).

2. Vehicle seat according to Claim 1, **characterized in that** the ramp (16e) is at an angle relative to the first seat rail (5) of less than 45º, in particular a maximum of 30º, and has an upper region (16f) extending parallel to the first seat rail (5).

3. Vehicle seat according to Claim 1 or 2, **characterized in that** the activation of the unlocking of the locking device (13) takes place by folding forward the backrest and activating the locking of the backrest in the folded-forward position, after a forward displacement movement of the vehicle seat (1).

4. Vehicle seat according to Claim 3, **characterized in that** the backrest is locked in the folded-forward position whilst the scanner (19) slides down over the ramp (16e), at the latest immediately when leaving the ramp (16e).

5. Vehicle seat according to Claim 3 or 4, **characterized in that** the unlocking of the backrest takes place in the folded-forward position after the scanner (19) has reached the ramp (16e) and whilst the scanner (19) slides up along the ramp (16e) but at the latest when the upper region (16f) of the ramp (16e) is reached.

6. Vehicle seat according to one of the preceding claims, **characterized in that** the locking element (16) is unlocked with a longitudinal adjustment of the vehicle seat and is entrained by stops (16d-20 or 16b"'-24), wherein the scanner (19) remains in abutment against the upper region (16f) of the ramp (16e).

7. Vehicle seat according to one of the preceding claims, **characterized in that** the scanner (19) provides a direct 1:1 transmission of pressure to the locking of the backrest in the entry position.

## Revendications

1. Siège de véhicule (1) réglable en longueur, avec un dossier à pivotement libre, susceptible d'être basculé vers l'avant et avec un dispositif de mémoire (18), le siège de véhicule (1) comportant au moins un premier rail de siège (5) fixe sur la structure, un deuxième rail de siège (8) guidé dans ledit premier rail de siège (5), relié avec le siège de véhicule (1) et un organe de réglage en longueur (3) avec un dispositif de verrouillage (13) désactivable, destiné à verrouiller les deux rails de siège (5, 8) et par basculement vers l'avant de son dossier et par déverrouillage du dispositif de verrouillage (13) le siège de véhicule (1) pouvant adopter une position de montée,
et le dispositif de mémoire (18) précédemment cité étant prévu pour mémoriser la position du deuxième rail de siège (8) fixe sur le siège de véhicule par rapport au premier rail de siège (5) fixe sur la structure,
le dispositif de mémoire (18) comportant un rail d'arrêt (14) avec des orifices d'enclenchement (14a) et un élément de blocage (16) avec une coulisse (16a) et des cliquets de blocage (16b) reliés de manière pivotante avec cette dernière,
et un agencement de transmission (26) étant prévu, lequel interagit avec un verrouillage de confort d'un dossier du siège de véhicule (1) dans une position de montée,
l'élément de blocage (16) comportant une rampe (16e) placée sur la coulisse (16a) avec une région supérieure (16f) avec laquelle interagit un détecteur (19) du dispositif de mémoire (18) et le détecteur (19) étant relié avec l'agencement de transmission (26) et le cliquet de blocage (16b) étant précontraint dans la direction de verrouillage au moyen d'un ressort, **caractérisé en ce que** le cliquet de blocage (16b) est monté en étant pivotant autour d'un axe de pivotement vertical sur la coulisse (16a) et pour mémoriser la position de mémoire, interagit avec des orifices d'enclenchement (14a) placés latéralement sur le rail d'arrêt (14) et
l'élément de blocage (16) comporte une butée (16d) débordant en direction verticale, laquelle est formée par l'axe de pivotement du cliquet de blocage (16b).

2. Siège de véhicule selon la revendication 1, **caractérisé en ce que** la rampe (16e) présente par rapport au premier rail de siège (5) un angle inférieur à 45°, notamment d'un maximum de 30° et une région supérieure (16f) s'étendant à la parallèle du premier rail de siège (5).

3. Siège de véhicule selon la revendication 1 ou la revendication 2, **caractérisé en ce que** l'activation du déverrouillage du dispositif de déverrouillage (13) s'effectue par basculement vers l'avant du dossier et par l'activation du verrouillage du dossier dans la position basculée vers l'avant, après un déplacement vers l'avant du siège du véhicule (1).

4. Siège de véhicule selon la revendication 3, **caractérisé en ce que** le verrouillage du dossier en position basculée vers l'avant pendant que le détecteur (19) coulisse vers le bas par-dessus la rampe (16e) s'effectue au plus tard directement lorsque la rampe (16e) est quittée.

5. Siège de véhicule selon la revendication 3 ou la revendication 4, **caractérisé en ce que** le déverrouillage du dossier de la position basculée vers l'avant s'effectue lorsque le détecteur (19) a atteint la rampe (16e) et pendant le coulissement vers le haut du détecteur (19) le long de la rampe (16e), mais au plus tard lors de l'atteinte de la région supérieure (16f) de la rampe (16e).

6. Siège de véhicule selon l'une quelconque des revendications précédentes, **caractérisé en ce que** l'élément de blocage (16) se déverrouille lors d'un réglage en longueur du siège de véhicule et est entraîné par l'intermédiaire de butées (16d à 20 ou 16b"' à 24), le détecteur (19) restant en appui sur la région supérieure (16f) de la rampe (16e).

7. Siège de véhicule selon l'une quelconque des revendications précédentes, **caractérisé en ce que** le détecteur (19) prévoit une transmission de pression directe 1:1 sur le verrouillage du dossier dans la position de montée.
